# EUROPÄISCHE PATENTSCHRIFT

(11) **EP 1 060 552 B1**
(45) Veröffentlichungstag und Bekanntmachung des Hinweises auf die Patenterteilung: **02.10.2002**
(21) Anmeldenummer: 99917776.9
(22) Anmeldetag: 03.03.1999
(51) Int. Cl.: H02H 9/00, H02J 1/14

(54) **FELDBUSANORDNUNG MIT EINEM FELDBUSVERTEILER**
FIELD BUS SYSTEM WITH A FIELD BUS DISTRIBUTOR
SYSTEME DE BUS DE TERRAIN A REPARTITEUR DE BUS DE TERRAIN

(30) Priorität: 06.03.1998 DE 19810778; 02.03.1999 DE 19910409
(43) Veröffentlichungstag der Anmeldung: 20.12.2000
(73) Patentinhaber: ABB PATENT GmbH, 68309 Mannheim (DE)
(72) Erfinder: WESTERFELD, Peter, D-61169 Friedberg (DE); VON ZUR GATHEN, Günter, D-40822 Mettmann (DE)
(74) Vertreter: Meissner, Peter E., Dipl.-Ing.
(86) Internationale Anmeldenummer: DE9900630
(87) Internationale Veröffentlichungsnummer: WO99045621

(56) Entgegenhaltungen:
- EP-A- 0 666 631
- US-A- 3 845 356

## Beschreibung

Die Erfindung bezieht sich auf eine Feldbusanordnung mit einem Verteiler für Feldbussysteme, welcher vorzugsweise im explosionsgefährdeten Bereich einer verfahrenstechnischen Anlage montierbar ist.

Feldbusse sind elektrische Einrichtungen zur Kommunikation zwischen im explosionsgefährdeten Bereich, dem sogenannten Feldbereich, angeordneten Feldgeräten wie Sensoren, Aktoren und Meßumformern einerseits und im nicht-explosionsgefährdeten Bereich, dem sogenannten Wartenbereich, angeordneten Steuerungs- und Regelungssystemen andererseits. Üblicherweise ist ein Feldbus als Zweidrahtleitung ausgeführt, die gleichzeitig zur Übertragung der Speiseleistung der angeschlossenen Feldgeräte dient. Die Kommunikation erfolgt dabei analog über eine 0/4...20 mA-Stromschleife oder digital, beispielsweise mittels FSK-Modulation, oder mit einer kombiniert analog/digitalen Signalübertragung.

Zur Verwendung in explosionsgefährdeten Bereichen sind an elektrische Betriebsmittel besondere Anforderungen gestellt, um einen möglichen Explosionsunfall auszuschließen. Bei der Installation und Inbetriebnahme von elektrotechnischen Einrichtungen und Ausrüstungen sowie bei Wartungsarbeiten an elektrotechnischen Einrichtungen und Ausrüstungen in verfahrenstechnischen Anlagen, die sich aufgrund ihrer Zweckbestimmung in einer explosionsgefährdeten Atmosphäre befinden, ist die Beachtung einschlägiger Rechtsvorschriften wie die "Verordnung über elektrische Anlagen in explosionsgefährdeten Räumen - ElexV", die auf den europäischen Normen zum Explosionsschutz EN 50 014 ff beruht, verbindlich.

Aufgrund dieser Rechtsvorschriften ist es ausschließlich bei eigensicheren Stromkreisen, die als Zündschutzart "Eigensicherheit" den Regeln der EN 50 020 unterliegen, gestattet, während des laufenden Betriebes elektrische Leitungen bedingungslos ab- und anzuklemmen.

Eigensichere Stromkreise sind jedoch leistungsbegrenzt und somit zum Anschluß von Geräten und Einrichtungen mit einem den vorgegebenen Grenzwert übersteigenden Leistungsbedarf ungeeignet.

Bei allen anderen Zündschutzarten ist vor der Manipulation an elektrischen Stromkreisen die gesamte Anlage soweit spannungsfrei zu schalten, daß metallische Bauteile der betreffenden Stromkreise spannungslos sind. Dabei wird der Fortgang des auf der verfahrenstechnischen Anlage ablaufenden Prozesses für die Zeitspanne zwischen Spannungsfreischaltung und Wiederinbetriebnahme unterbrochen. Anschließend ist der Prozeß neu anzufahren. Diese Unterbrechungen werden von Betreibern derartiger verfahrenstechnischer Anlagen als überaus störend empfunden.

Es sind Sicherheitsbarrieren in mehrkanaliger Ausführung z. B. von der Fa.MTL, (Serie 4700) bekannt, bei denen jeder Meßkanal mit einer separaten Strombegrenzung und einer separaten Spannungsbegrenzung ausgestattet ist. Sicherheitsbarrieren sind regelmäßig im nicht-explosionsgefährdeten Bereich angeordnet.

Weiterhin ist der Patentschrift DE 44 03 961 C2 ein Speisesystem für einen eigensicheren Feldbus beschrieben, bei dem die Mittel zur Strom- und Spannungsbegrenzung räumlich getrennt angeordnet sind. Hier ist die Zertifizierung entsprechend den geltenden Rechtsvorschriften infolge der Einbeziehung mehrerer Geräte in die Konformitätsbescheinigung für den Explosionsschutz nachteilig.

EP-A-0.666.631 offenbart eine Anordnung mit den Merkmalen des Oberbegriffs des Anspruchs 1.

Der Erfindung liegt daher die Aufgabe zugrunde, eine Feldbusanordnung mit einem im explosionsgefährdeten Bereich einer verfahrenstechnischen Anlage montierbaren Feldbusverteiler zur Bereitstellung einer Vielzahl von Anschlußklemmen eigensicherer Stromkreise zur Energieversorgung und Datenübertragung für busfähige Feldgeräte anzugeben, wobei der Feldbusverteiler zu einer betriebsmäßig erdfreien Sicherheitsbarriere erweiterbar ist.

Erfindungsgemäß wird diese Aufgabe mit den Mitteln des Patentanspruchs 1 gelöst. Vorteilhafte Ausgestaltungen der Erfindung sind in den rückbezogenen Ansprüchen angegeben.

Grundgedanke der Erfindung ist dabei die Umsetzung und Verteilung einer großen elektrischen Leistung zur Energieversorgung von Feldgeräten sowie deren Reduzierung und Begrenzung auf Ströme und Spannungen, die den Anschluß von bescheinigten explosionsgeschützten Betriebsmitteln ermöglicht.

Dazu ist im explosionsgefährdeten Bereich einer verfahrenstechnischen Anlage ein Feldbusverteiler angeordnet, der die Reduzierung von Strom und Spannung auf eigensichere Werte realisiert, wobei die Anzahl der anschließbaren Feldgeräte möglichst hoch ist.

Im einzelnen ist im nicht-explosionsgefährdeten Bereich eine energiereiche Spannungsquelle angeordnet, deren Ausgangsleistung unabhängig von durch Zündschutzarten vorgegebenen Limitierungen entsprechend der Anzahl anzuschließender Feldgeräte und deren Leitungsbedarf bemeßbar ist.

Im nicht-explosionsgefährdeten Bereich ist darüber hinaus der ausschließlich Kommunikationssignale der Datenübertragung führende Feldbushauptstrang verlegt.

Der Feldbushauptstrang und die Spannungsquelle sind an einen vorzugsweise im nicht-explosionsgefährdeten Bereich angeordneten Feldbuskoppler angeschlossen. Der Feldbuskoppler weist drei voneinander galvanisch getrennte Stromkreise auf, von denen ein erster Stromkreis mit dem Feldbushauptstrang verbunden ist. Über einen zweiten Stromkreis ist der Feldbuskoppler mit der Spannungsquelle verbunden. Der dritte Stromkreis ist als nichteigensicherer Stromkreis in den explosionsgefährdeten Bereich geführt und mit der Speisespannung der Spannungsquelle und den Kommunikationssignalen der Datenübertragung beaufschlagt.

Die Leiter des nichteigensicheren Stromkreises sind an Klemmen eines gesicherten Anschlusses zum Anschluß eines nichteigensicheren Stromkreises eines im explosionsgefährdeten Bereich angeordneten Feldbusverteilers angeschlossen. Dieser Feldbusverteiler ist mit n Anschlüssen für eigensichere Stromkreise zum Anschluß einer Mehrzahl von Feldgeräten ausgestattet. Jeder der n Anschlüsse für eigensichere Stromkreise ist über ein Strombegrenzungsmittel mit einer Sammelschienenanordnung verbunden. Die gesicherten Anschlüsse zum Anschluß eines nichteigensicheren Stromkreises sind über Spannungsbegrenzungsmittel mit der Sammelschienenanordnung verbunden.

Der Feldbusverteiler weist eine gehäuseartige, alle spannungsführenden Bauteile gesamtheitlich umschließende Kapselung auf.

Jeder von dem Feldbusverteiler ausgehende eigensichere Stromkreis führt eine in der Spannung und der Stromstärke begrenzte Speiseleistung für die angeschlossenen Feldgeräte und überlagerte Kommunikationssignale der Datenübertragung.

Vorteilhafterweise ist der Verkabelungsaufwand zwischen Einrichtungen im nicht-explosionsgefährdeten Bereich und Einrichtungen im explosionsgefährdeten Bereich sehr gering. Dabei vermeidet der Gegenstand der vorliegenden Erfindung sowohl die Spannungsbegrenzung je Meßkanal bei mehrkanaligen Sicherheitsbarrieren wie auch die Einbeziehung mehrerer Geräte in eine Konformitätsbescheinigung, da im Rahmen der erfindungsgegenständlichen Feldbusanordnung lediglich der Feldbusverteiler für sich Gegenstand behördlicher Zertifizierung ist. Folglich ist der technische Aufwand zur Erlangung der zur Verwendung von elektrischen Betriebsmitteln im explosionsgefährdeten Bereich vorgeschriebenen Zertifizierung auf das technisch erforderliche Minimum begrenzt.

Die Spannungsbegrenzungsmittel sind aus redundant antiseriell geschalteten Zenerdioden aufgebaut, die dem nichteigensicheren Stromkreis parallel geschaltet sind und denen mindestens eine Sicherung speiseseitig vorgeschaltet ist. Durch Erdung des Knotens der Zusammenschaltung der Zenerdioden ist das Spannungsbegrenzungsmittel auf einfache und vorteilhafte Weise und unter Verzicht auf zusätzliche Bauteile zu einer betriebsmäßig erdfreien Sicherheitsbarriere erweiterbar.

Die Erfindung wird nachstehend anhand von Ausführungsbeispielen näher erläutert. Die dazu erforderlichen Zeichnungen zeigen:
- Figur 1: eine Prinzipdarstellung einer Feldbusanordnung
- Figur 2: eine detailierte Darstellung eines Feldbusverteilers
- Figur 3: eine detailierte Darstellung eines zu einer betriebsmäßig erdfreien Sicherheitsbarriere erweiterten Feldbusverteilers

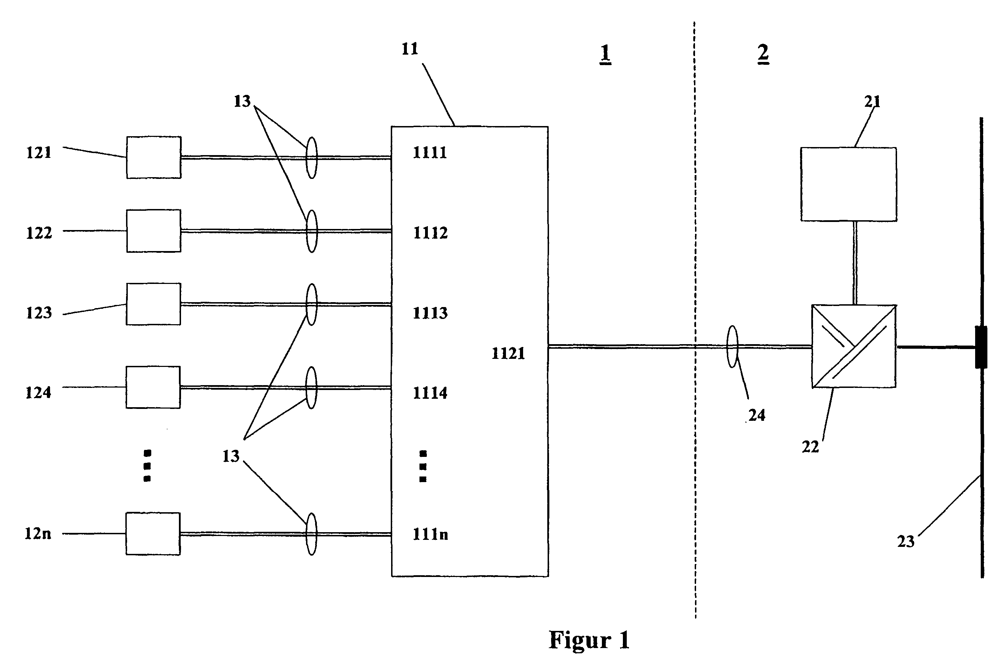

Das Funktionsprinzip ist aus Figur 1 ersichtlich. Der Feldbus wird über einen Feldbuskoppler 22 ausgehend von einem im nicht-explosionsgefährdeten Bereich 2 geführten Feldbushauptstrang 23 dem Feldbusverteiler 11 im explosionsgefährdeten Bereich 1 zugeführt. Der Feldbuskoppler 22 ist dabei im nicht-explosionsgefährdeten Bereich 2 angeordnet und umfaßt eine genormte physikalische Schnittstelle zur Ankoppelung des in den explosionsgefährdeten Bereich 1 geführten Feldbusses. Über den Feldbuskoppler 22 wird auch die notwendige Energieversorgung über den Feldbus bereitgestellt.

Der Feldbushauptstrang 23 ist mit einem Prozeßleitsystem oder einer speicherprogrammierbaren Steuerung verbunden, in der über den Feldbus empfangene Meßdaten ausgewertet und verarbeitet werden und von der ausgehend Stellwerte und Konfigurationseinstellungen über den Feldbus versendbar sind. Der hierfür notwendige Übertragungsmechanismus ist in unterschiedlichsten nationalen und internationalen Normen definiert. Die derzeit weit verbreitete Anwendung einer physikalischen Übertragungsebene für explosionsgefährdete Anlagen ist die Schnittstelle nach IEC 1158 Teil 2 bei der die Daten über eine Manchester-Kodierung übertragen werden.

Die Erfindung ist jedoch prizipiell für alle Feldbussysteme anwendbar, die die Übertragung über ein Adempaar ermöglichen. Hierzu gehört auch die für analoge Meßumformer übliche HART-Schnittstelle in Multidrop-Schaltung, wobei hier auf die gleichzeitige Übertragung des analogen Meßwertes verzichtet wird.

Im einzelnen ist im nicht-explosionsgefährdeten Bereich 2 eine energiereiche Spannungsquelle 21 angeordnet, deren Ausgangsleistung unabhängig von durch Zündschutzarten vorgegebenen Limitierungen entsprechend der Anzahl anzuschließender Feldgeräte 121 bis 12n und deren Leitungsbedarf bemeßbar ist.

Im nicht-explosionsgefährdeten Bereich 2 ist darüber hinaus der ausschließlich Kommunikationssignale der Datenübertragung führende Feldbushauptstrang 23 verlegt.

Der Feldbushauptstrang 23 und die Spannungsquelle 21 sind an einen im nicht-explosionsgefährdeten Bereich 2 angeordneten Feldbuskoppler 22 angeschlossen. Der Feldbuskoppler 22 weist drei voneinander galvanisch getrennte Stromkreise auf, von denen ein erster Stromkreis mit dem Feldbushauptstrang 23 verbunden ist. Über einen zweiten Stromkreis ist der Feldbuskoppler 22 mit der Spannungsquelle 21 verbunden. Der dritte Stromkreis ist als nichteigensicherer Stromkreis 24 in den explosionsgefährdeten Bereich 1 geführt und mit der Speisespannung der Spannungsquelle 21 und den Kommunikationssignalen der Datenübertragung beaufschlagt.

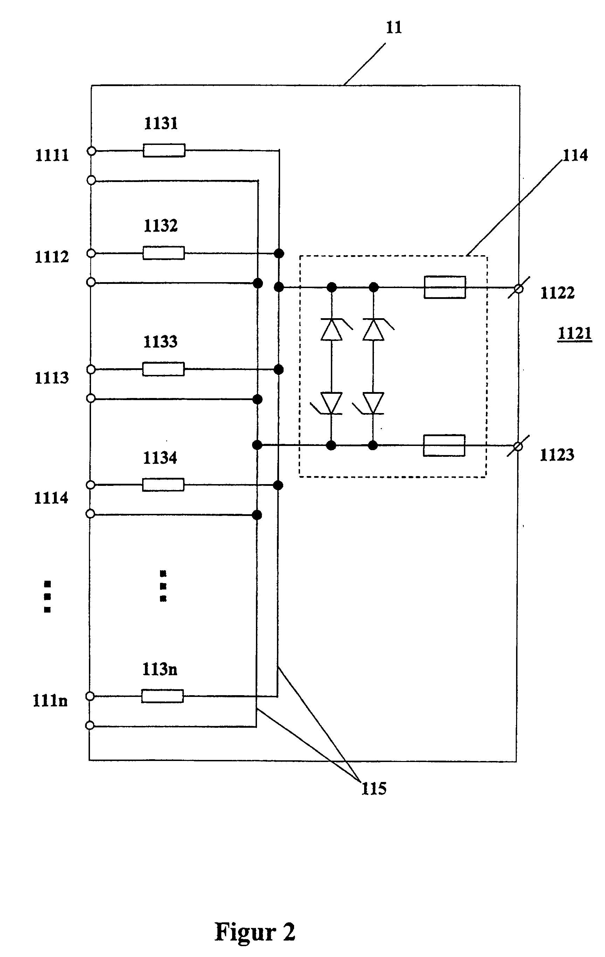

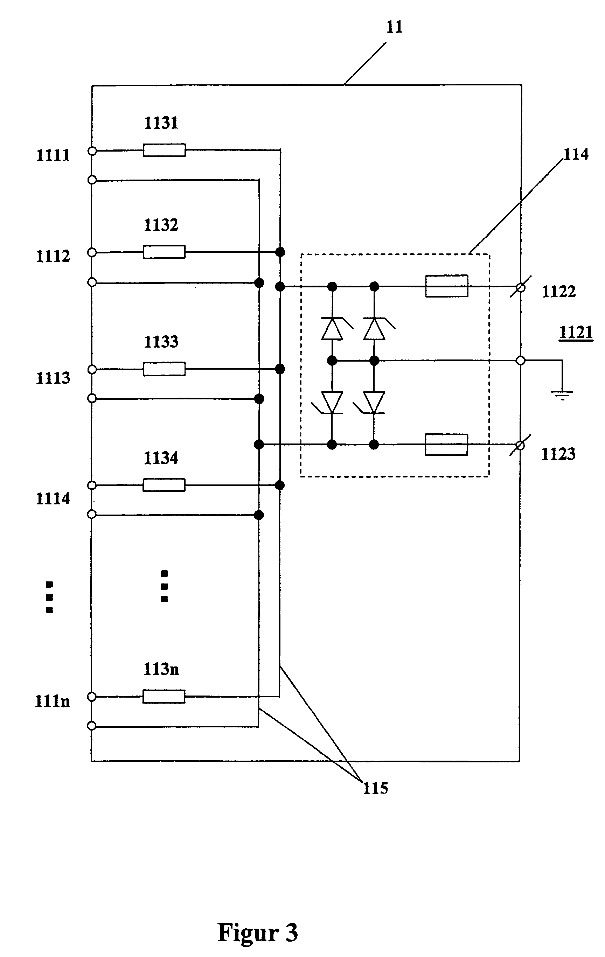

Die Leiter des nichteigensicheren Stromkreises 24 sind gemäß den Figuren 2 und 3 an Klemmen 1122 und 1123 eines gesicherten Anschlusses 1121 zum Anschluß eines nichteigensicheren Stromkreises 24 des im explosionsgefährdeten Bereich 1 angeordneten Feldbusverteilers 11 angeschlossen. Die Klemmen 1122 und 1123 des gesicherten Anschlusses 1121 weisen einen mechanischen Schutz vor unzulässiger Manipulation der Verbindung zwischen den Leitern des nichteigensicheren Stromkreises 24 und der jeweiligen Klemme 1122 und 1123 im spannungsführenden Zustand der Klemmen 1122 und 1123 auf. Derartige Klemmen sind für sich bekannt und beispielsweise in der DE 195 13 645 beschrieben.

Der Feldbusverteiler 11 ist mit n Anschlüssen 1111 bis 111n für eigensichere Stromkreise zum Anschluß einer Mehrzahl von Feldgeräten 121 bis 12n ausgestattet. Jeder der n Anschlüsse 1111 bis 111n für eigensichere Stromkreise ist über ein Strombegrenzungsmittel 1131 bis 113n mit einer Sammelschienenanordnung 115 verbunden. Die Klemmen 1122 und 1123 des gesicherten Anschlusses 1121 zum Anschluß eines nichteigensicheren Stromkreises 24 sind über Spannungsbegrenzungsmittel 114 mit der Sammelschienenanordnung 115 verbunden.

Die Strombegrenzungsmittel 1131 bis 113n sind im einfachsten Fall kanalweise für jeden eigensicheren Stromkreis 13 als Serienwiderstände ausgeführt. Alternativ kann eine elektronische Strombegrenzung vorgesehen sein.

Der Feldbusverteiler 11 weist eine gehäuseartige, alle spannungsführenden Bauteile gesamtheitlich umschließende Kapselung auf. Dabei kann vorgesehen sein, die Kapselung durch Verguß mit einer geeigneten, für sich bekannten Vergußmasse zu realisieren. Alternativ kann vorgesehen sein, die Kapselung durch ein den Feldbusverteiler 11 umschließendes, mit Sand gefülltes Gehäuse zu realisieren.

Jeder von dem Feldbusverteiler 11 ausgehende eigensichere Stromkreis 1111 bis 111n führt eine in der Spannung und der Stromstärke begrenzte Speiseleistung für die angeschlossenen Feldgeräte 121 bis 12n und überlagerte Kommunikationssignale der Datenübertragung.

In Abhängigkeit vom Leistungsbedarf eines jeden Feldgerätes 121 bis 12n kann in besonderer Ausgestaltung der Erfindung vorgesehen sein, eine Mehrzahl von Feldgeräten 121 bis 12n an denselben eigensicheren Stromkreis 13 anzuschalten.

Die Spannungsbegrenzungsmittel 114 sind aus redundant antiseriell geschalteten Zenerdioden aufgebaut, die dem nichteigensicheren Stromkreis 24 parallel geschaltet sind und denen mindestens eine Sicherung speiseseitig vorgeschaltet ist. Dadurch werden Spannungsüberhöhungen im nichteigensicheren Stromkreis 24 unabhängig von ihrer Polarität wirkungsvoll auf zulässige Werte begrenzt.

Die Mittel zur Spannungsbegrenzung 114 sind in jedem Feldbusverteiler 11 für alle von dem Feldbusverteiler 11 ausgehenden eigensicheren Stromkreise 13 einmalig ausgeführt.

Durch Erdung des Knotens der Zusammenschaltung der Zenerdioden gemäß Figur 3 ist das Spannungsbegrenzungsmittel 114 auf einfache und vorteilhafte Weise und unter Verzicht auf zusätzliche Bauteile zu einer betriebsmäßig erdfreien Sicherheitsbarriere erweiterbar. Dadurch wird bewirkt, daß die sichere und vollständige Trennung des Feldbusses von dem Versorgungsnetz.

Zur einfachen Spannungsbegrenzung gemäß Figur 2 kann alternativ vorgesehen sein, zwei bipolare Zenerdioden parallelzuschalten. Darüber hinaus kann vorgesehen sein, die Spannungsbegrenzung durch andere geeignete Mittel wie integrierte Spannungsregler oder Tyristorschaltungen zu realisieren.

Solche Feldbuskoppler 22 sind für sich bekannt und als Zubehör für Feldbus-Instrumentierungen lieferbar.

Damit eine möglichst große Anzahl von Feldgeräten an den Feldbuskoppler angeschlossen werden kann, muß eine große elektrische Leistung in den explosiongefährdeten Bereich geführt werden. Beispielsweise ist die Bereitstellung einer Nutzleistung von ca. 320 mA * 16 V = 5,12 W wünschenswert, wenn bei Anschluß von n = 32 Feldgeräten je Feldgerät ein Strom von ca. 10 mA erforderlich wird. Derartige Leistungen und Nutzströme sind mit der Schutzart "Eigensicherheit" unvereinbar und daher in erhöhter Sicherheit in den explosionsgefährdeten Bereich geführt.

Praktisch ist ein Adernpaar als Busleitung zu dem Feldbusverteiler 11, der im explosionsgefährdeten Bereich 1 einer verfahrenstechnischen Anlage montiert ist, verlegt. Die Busleitung überträgt über einen nichteigensicheren Stromkreis 24 die erforderliche Energie zur Versorgung der Meßumformer, Sensoren und Aktoren 121 bis 12n und sie überträgt die digital kodierten Meßdaten vom im explosionsgefährdeten Bereich 1 ablaufenden Prozeß in die im nicht-explosionsgefährdeten Bereich 2 angeordneten Warte, wo eine speicherprogrammierbare Steuerung oder ein Prozeßleitsystem die Auswertung und Verarbeitung der Meßdaten vornimmt. Über den Feldbus können auch unterschiedliche Betriebsarten der Meßumformer, Sensoren und Aktoren 121 bis 12n eingestellt werden.

Die auf dem Feldbus geführte sicherheitsrelvante Spannung, Strom und Leistung ist zunächst nach oben hin nicht begrenzt. Daher ist diese Doppelleitung im Sinne des Explosionschutzes in der Zündschutzart "Erhöhte Sicherheit " ausgeführt. Dies gilt ebenso für den Anschluß und die Kapselung des Feldbusses im explosionsgefährdeten Bereich 1 innerhalb des Feldbusverteilers beziehungsweise des Verteilergehäuses. Erst nach vollständiger vorschriftsmäßiger Begrenzung von Strom und Spannung ist die "Eigensicherheit" gewährleistet. Nur bei Eigensicherheit ist der Austausch und Service von Feldgeräten für den Anwender ohne Gefahr im laufenden Betrieb einer Anlage möglich.

Der Feldbusverteiler nach Figur 2 ist autark zertifizierbar. Es ist hier lediglich ein Nachweis derart notwendig, daß das Feldbuspotential durch das vorgeschaltete Netzteil sicher vom Versorgungsnetz getrennt ist. Alle Bauteile in dem Verteilergehäuse sind derart dimensioniert, daß die Anforderungen der Normen erfüllt werden.

Der Feldbusverteiler gemäß Figur 3 stellt eine Sicherheitsbarriere für Feldbussysteme dar, deren Montage im explosionsgefährdeten Bereich 1 zulässig ist und die eine gemeinsame Spannungsbegrenzung für alle Meßkanäle aufweist. Der dazu erforderliche Anschluß an den Potentialausgleich (Symbol "Erde") ist vorhanden. Damit entfällt die Anforderung, daß das Feldbuspotential durch das vorgeschaltete Netzteil sicher vom Versorgungsnetz getrennt ist.

Die Anforderungen an die galvanische Trennung des Feldbusses sind hier nicht durch den Explosionsschutz bestimmt sondern beschränken sich auf Werte, die nur für die Funktion notwendig sind.

### Bezugszeichenliste

- 1: explosionsgefährdeter Bereich
- 11: Feldbusverteiler
- 1111 bis 111n: Anschluß für einen eigensicheren Stromkreis
- 1121: gesicherter Anschluß
- 1122, 1123: Klemmen
- 1131 bis 113n: Strombegrenzungsmittel
- 114: Spannungsbegrenzungsmittel
- 115: Sammelschiene
- 121 bis 12n: Feldgeräte
- 13: eigensicherer Stromkreis

- 2: nicht-explosionsgefährdeter Bereich
- 21: Spannungsquelle
- 22: Feldbuskoppler
- 23: Feldbushauptstrang
- 24: nichteigensicherer Stromkreis

## Patentansprüche

1. Feldbusanordnung mit einem Feldbusverteiler (11) zur Montage im explosionsgefährdeten Bereich (1) zur Speisung einer Mehrzahl von im explosionsgefährdeten Bereich (1) angeordneten Feldgeräten (121 bis 12n) über eigensichere Stromkreise (13) aus mindestens einer im nicht-explosionsgefährdeten Bereich (2) angeordneten, energiereichen Spannungsquelle (21) und zur Datenübertragung, wobei
a ) ein im nicht-explosionsgefährdeten Bereich (2) angeordneter Feldbuskoppler (22) mit drei voneinander galvanisch getrennten Stromkreisen vorgesehen ist,
- wobei der Feldbuskoppler (22) über den ersten Stromkreis mit einem im nicht-explosionsgefährdeten Bereich (2) geführten Feldbushauptstrang (23) verbunden ist,
- die Spannungsquelle (21) über den zweiten Stromkreis mit dem Feldbuskoppler (22) verbunden ist und
- der dritte Stromkreis als nichteigensicherer Stromkreis (24) in den explosionsgefährdeten Bereich (1) geführt ist,
b ) der Feldbusverteiler (11) ausgestattet ist
- mit einer gehäuseartigen, alle spannungsführenden Bauteile gesamtheitlich umschließenden Kapselung,
- mit n Anschlüssen (1111 bis 111n) für eigensichere Stromkreise (13) zum Anschluß einer Mehrzahl von Feldgeräten (121 bis 12n),
- mit mindestens einem gesicherten Anschluß (1121) zum Anschluß des nichteigensicheren Stromkreises (24),
- mit Strombegrenzungsmitteln (1131 bis 113n),
und einer Sammelschienenanordnung (115),
- wobei jeder der n Anschlüsse (1111 bis 111n) für eigensichere Stromkreise jeweils über ein Strombegrenzungsmittel (1131 bis 113n) mit der Sammelschienenanordnung (115) verbunden ist
**dadurch gekennzeichnet, daß** des Feldbusverteiler (11) ausgestattet ist
- mit Spannungsbegrenzungsmitteln (114) und
- wobei der gesicherte Anschluß (1121) zum Anschluß eines nichteigensicheren Stromkreises (24) über die Spannungsbegrenzungsmittel (114) mit der Sammelschienenanordnung (115) verbunden ist.

2. Feldbusanordnung nach Anspruch 1
**dadurch gekennzeichnet,**
**daß** der gesicherten Anschluß (1121) des Feldbusverteilers (11) zum Anschluß des nichteigensicheren Stromkreises (24) Klemmen (1122 und 1123) mit einen mechanischen Schutz vor unzulässiger Manipulation der Verbindung zwischen den Leitern des nichteigensicheren Stromkreises (24) und der jeweiligen Klemme (1122 und 1123) im spannungsführenden Zustand der Klemmen (1122 und 1123) aufweist.

3. Feldbusanordnung nach einem der Ansprüche 1 und 2
**dadurch gekennzeichnet,**
**daß** die Spannungsbegrenzungsmittel (114) durch antiseriell geschaltete Zenerdioden gebildet sind.

4. Feldbusanordnung nach Anspruch 3
**dadurch gekennzeichnet,**
**daß** die dem nichteigensicheren Stromkreis (24) abgewandten Anschlüsse der Zenerdioden des Spannungsbegrenzungsmittel (114) zu einem Knoten zusammengeschaltet sind und daß der Feldbusverteiler (11) einen Erdungsanschluß aufweist, der mit dem Knoten der Zusammenschaltung der Zenerdioden des Spannungsbegrenzungsmittel (114) verbunden ist.

5. Feldbusanordnung nach einem der Ansprüche 1 bis 4
**dadurch gekennzeichnet,**
**daß** der Feldbusverteiler (11) durch Verguß aller spannungsführenden Bauteile mit einer geeigneten Vergußmasse gesamtheitlich umschließend gekapselt ist.

6. Feldbusanordnung nach einem der Ansprüche 1 bis 4
**dadurch gekennzeichnet,**
**daß** der Feldbusverteiler (11) durch ein den Feldbusverteiler (11) gesamtheitlich umschließendes, mit Sand gefülltes Gehäuse gekapselt ist.

## Claims

1. Field bus system with a field bus distributor (11) for installing in a potentially explosive area (1) for feeding a plurality of field devices (121 to 12n), which are disposed in the potentially explosive area (1), via intrinsically safe circuits (13) from at least one high-energy voltage source (21), which is disposed in a non-potentially explosive area (2), and for data transmission, wherein
a) a field bus coupler (22), which is disposed in the non-potentially explosive area (2), is provided with three circuits which are electrically isolated from one another
- wherein the field bus coupler (22) is connected via the first circuit to a main field bus line (23), which is routed in the non-potentially explosive area (2),
- the voltage source (21) is connected via the second circuit to the field bus coupler (22) and
- the third circuit is routed as non-intrinsically safe circuit (24) into the potentially explosive area (1),
b) the field bus distributor (11) is fitted
- with a housing-like encapsulation, which entirely encloses all live components,
- with n connections (1111 to 111n) for intrinsically safe circuits (13) for connecting a plurality of field devices (121 to 12n),
- with at least one protected connection (1121) for connecting the non-intrinsically safe circuit (24),
- with current-limiting means (1131 to 113n),
- and a busbar system (115),
- wherein each of the n connections (1111 to 111n) for intrinsically safe circuits is connected via a current-limiting means (1131 to 113n) to the busbar system (115), **characterised in that** the field bus distributor (11) is fitted
- with voltage limiting means (114),
- wherein the protected connection (1121) for connecting a non-intrinsically safe circuit (24) is connected via the voltage-limiting means (114) to the busbar system (115).

2. Field bus system according to Claim 1,
**characterised in**
**that** the protected connection (1121) of the field bus distributor (11) for connecting the non-intrinsically safe circuit (24) comprises terminals (1122 and 1123) with a mechanical protection against inadmissible manipulation of the connection between the conductors of the non-intrinsically safe circuit (24) and the respective terminal (1122 and 1123) when the terminals (1122 and 1123) are in the live state.

3. Field bus system according to either of Claims 1 and 2,
**characterised in**
**that** the voltage-limiting means (114) are formed by Zener diodes connected in antiserial fashion.

4. Field bus system according to Claim 3,
**characterised in**
**that** the connections of the Zener diodes of the voltage-limiting means (114) which are remote from the non-intrinsically safe circuit (24) are interconnected to form a node, and that the field bus distributor (11) comprises an earth connection which is connected to the node of the interconnection of the Zener diodes of the voltage-limiting means (114).

5. Field bus system according to any one of Claims 1 to 4,
**characterised in**
**that** the field bus distributor (11) is encapsulated in entirely enclosed fashion by potting all live components with a suitable potting compound.

6. Field bus system according to any one of Claims 1 to 4,
**characterised in**
**that** the field bus distributor (11) is encapsulated by a housing which entirely encloses the field bus distributor (11) and is filled with sand.

## Revendications

1. Agencement de bus de champ comportant un répartiteur de bus de champ (11) pour le montage dans la zone (1) à risque d'explosion pour l'alimentation d'une pluralité d'appareils de champ (121 à 12n) agencés dans la zone (1) à risque d'explosion par l'intermédiaire de circuits (13) à sécurité intrinsèque à partir d'au moins une source de tension (21), riche en énergie, agencée dans la zone (2) sans risque d'explosion, et pour le transfert de données,
a) un coupleur de bus de champ (22) agencé dans la zone (2) sans risque d'explosion étant muni de trois circuits séparés l'un de l'autre de façon galvanique,
- le coupleur de bus de champ (22) étant relié, par l'intermédiaire du premier circuit, à une ligne principale de bus de champ (23) guidée dans la zone (2) sans risque d'explosion,
- la source de tension (21) étant reliée, par l'intermédiaire du second circuit, au coupleur de bus de champ (22), et
- le troisième circuit, comme circuit (24) sans sécurité intrinsèque, étant guidé dans la zone (1) à risque d'explosion,
b) le répartiteur de bus de champ (11) étant muni
- d'un blindage, du type boîtier, entourant en totalité toutes les pièces guidant la tension,
- de n raccords (1111 à 111n) pour des circuits (13) à sécurité intrinsèque pour le raccordement d'une pluralité d'appareils de champ (121 à 12n),
- d'au moins un raccord protégé (1121) pour le raccordement du circuit (24) sans sécurité intrinsèque,
- de moyens de limitation de courant (1131 à 113n) et d'un agencement de rail de collecte (115),
- chacun des n raccords (1111 à 111n) pour des circuits à sécurité intrinsèque étant relié, à chaque fois, par l'intermédiaire d'un moyen de limitation de courant (1131 à 113n) à l'agencement de rail de collecte (115),
**caractérisé en ce que** le répartiteur de bus de champ (11) est muni
- de moyens de limitation de tension (114), et
- le raccord protégé (1121) pour le raccordement d'un circuit (24) sans sécurité intrinsèque étant relié par l'intermédiaire des moyens de limitation de tension (114) à l'agencement de rail de collecte (115).

2. Agencement de bus de champ selon la revendication 1,
**caractérisé en ce que** le raccord protégé (1121) du répartiteur de bus de champ (11) pour le raccordement du circuit (24) sans sécurité intrinsèque présente des bornes de connexion (1122 et 1123) ayant une protection mécanique contre une manipulation non autorisée de la liaison entre les conducteurs du circuit (24) sans sécurité intrinsèque et de la borne de connexion respective (1122 et 1123) dans l'état guidant la tension des bornes de connexion (1122 et 1123).

3. Agencement de bus de champ selon une des revendications 1 et 2,
**caractérisé en ce que** les moyens de limitation de tension (114) sont formés par des diodes Zener montées de façon antisérielle.

4. Agencement de bus de champ selon la revendication 3,
**caractérisé en ce que** les raccords, opposés au circuit (24) sans sécurité intrinsèque, des diodes Zener du moyen de limitation de tension (114) sont interconnectés en un noeud, et **en ce que** le répartiteur de bus de champ (11) présente une prise de terre qui est reliée au noeud de l'interconnexion des diodes Zener du moyen de limitation de tension (114).

5. Agencement de bus de champ selon une des revendications 1 à 4,
**caractérisé en ce que** le répartiteur de bus de champ (11) est encapsulé en l'entourant en totalité par enrobage de toutes les pièces guidant la tension par une masse de remplissage appropriée.

6. Agencement de bus de champ selon une des revendications 1 à 4,
**caractérisé en ce que** le répartiteur de bus de champ (11) est encapsulé par un boîtier rempli de sable, entourant en totalité le répartiteur de bus de champ (11).
